(19) Europäisches Patentamt
European Patent Office
Office européen des brevets

(11) **EP 4 425 608 A1**

(12) **EUROPEAN PATENT APPLICATION**
published in accordance with Art. 153(4) EPC

(43) Date of publication:
**04.09.2024 Bulletin 2024/36**

(21) Application number: **23743545.8**

(22) Date of filing: **20.01.2023**

(51) International Patent Classification (IPC):
*H01M 4/36* (2006.01)    *H01M 4/04* (2006.01)
*H01M 4/505* (2010.01)    *H01M 4/525* (2010.01)
*H01M 4/62* (2006.01)    *H01M 10/052* (2010.01)
*H01M 4/02* (2006.01)

(52) Cooperative Patent Classification (CPC):
H01M 4/02; H01M 4/04; H01M 4/36; H01M 4/505;
H01M 4/525; H01M 4/62; H01M 10/052;
Y02E 60/10

(86) International application number:
**PCT/KR2023/001056**

(87) International publication number:
**WO 2023/140702 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.01.2022 KR 20220009552**

(71) Applicant: **LG Chem, Ltd.**
**Yeongdeungpo-gu**
**Seoul 07336 (KR)**

(72) Inventors:
• **LEE, Geun Sung**
**Daejeon 34122 (KR)**
• **LEE, Eun Jeong**
**Daejeon 34122 (KR)**
• **PARK, Sung Eun**
**Daejeon 34122 (KR)**
• **KIM, Ki Hwan**
**Daejeon 34122 (KR)**
• **KIM, Eui Tae**
**Daejeon 34122 (KR)**

(74) Representative: **Plasseraud IP**
**104 Rue de Richelieu**
**CS92104**
**75080 Paris Cedex 02 (FR)**

(54) **POSITIVE ELECTRODE AND LITHIUM SECONDARY BATTERY COMPRISING SAME**

(57) A positive electrode includes a positive electrode active material, wherein the present invention relates to a positive electrode, in which adhesion between a positive electrode active material layer and a current collector is excellent by controlling distribution of a binder in the positive electrode active material layer, and a lithium secondary battery including the same.

[FIG. 1]

Example 2

EP 4 425 608 A1

Processed by Luminess, 75001 PARIS (FR)

**Description**

**TECHNICAL FIELD**

[Cross-reference to Related Applications]

This application claims priority from Korean Patent Application No. 10-2022-0009552, filed on January 21, 2022, the disclosure of which is incorporated by reference herein.

[Technical Field]

The present invention relates to a positive electrode and a lithium secondary battery including the same.

**BACKGROUND ART**

With the recent technological development of electric vehicles, demand for high-capacity secondary batteries is increasing, and, accordingly, research on a positive electrode using a positive electrode active material having excellent capacity characteristics is being actively conducted.

According to the related art, during preparation of a positive electrode, it is common for a binder to concentrate on an upper portion in a drying process. In this case, adhesion near a current collector was inevitably weakened, and, accordingly, There was a problem in that the overall adhesion of the electrode unexpectedly weakened, instead of strengthened, compared to an amount of the binder added. If the amount of the binder is increased in order to solve this problem, an amount of a positive electrode active material is inevitably reduced as much as the increased amount of the binder, and this causes a reduction in energy density of the electrode.

Thus, in order to improve the adhesion of the electrode without reducing the energy density of the electrode, that is, without increasing the amount of the binder, it is necessary to cause the binder to be evenly distributed in a positive electrode active material layer.

In this regard, International Patent Application Publication No. WO2011/033707 discloses an electrode having improved adhesion between an electrode active material layer and a current collector. Specifically, the above document discloses that an electrode active material having an olivine-type crystal structure, or a spinel-type crystal structure is induced to easily absorb a liquid component, such as a dispersion medium, included in an electrode slurry by controlling the amount of oil absorption by the electrode active material. Thus, a large amount of the dispersion medium is used during preparation of the electrode slurry, and accordingly, viscosity of the electrode slurry is reduced to induce the binder to move easily in the electrode active material layer during drying such that distribution of the binder is controlled. However, according to the above document, since a spray pyrolysis method of heating a sprayed mist-like precursor has to be used during preparation of the electrode active material in order to control the oil absorption amount of the electrode active material, the types of applicable electrode active material are limited.

(Patent Document 1) WO2011/033707 A1

SUMMARY OF THE INVENTION

**DISCLOSURE OF THE INVENTION**

**TECHNICAL PROBLEM**

An object of the present invention is to improve adhesion between a positive electrode active material layer and a current collector by controlling distribution of a binder in the positive electrode active material layer in a positive electrode including a positive electrode active material.

That is, an aspect of the present invention provides a positive electrode including a positive electrode active material in which distribution of a binder is controlled during formation of a positive electrode active material layer by controlling surface properties of the positive electrode active material in a coating layer. Further, an increase in resistance due to the coating layer may be minimized by including the particulate positive electrode active material in which the coating layer containing a metal oxide is formed on a surface thereof.

**TECHNICAL SOLUTION**

In order to solve the above-described tasks, the present invention provides a positive electrode and a lithium secondary battery including the same.

(1) The present invention provides a positive electrode including a current collector and a positive electrode active material layer formed on at least one surface of the current collector, wherein the positive electrode active material layer includes a particulate positive electrode active material and a fluorine-based binder, wherein the particulate positive electrode active material includes a lithium transition metal composite oxide, and a coating layer containing a metal oxide on a surface of the particulate positive electrode active material, wherein the coating layer has a thickness of 0.1 nm or more to 2.0 nm or less, and, when an intensity of an F K$\alpha$ signal is measured using an EDS (Energy-dispersive X-ray spectroscopy) line scan on a cross section of the positive electrode active material layer which crosses a top of the positive electrode active material layer, as a top surface of the positive electrode active material layer, and a bottom of the positive electrode active material layer, as an interface between the positive electrode active material layer and the current collector, a ratio (BPH/TPH) of a peak intensity height (BPH) of the bottom of the positive electrode active material layer to a peak intensity height (TPH) of the top of the positive electrode active material layer is 0.8 or more.

(2) The present invention provides the positive electrode of (1) above, wherein the lithium transition metal composite oxide includes 80 mol% or more of nickel, based on total transition metals excluding lithium.

(3) The present invention provides the positive electrode of (1) or (2) above, wherein the lithium transition metal composite oxide is represented by Formula 1.

$$[\text{Formula 1}] \qquad Li_aNi_bCo_cMn_dM^1_eO_2$$

wherein, in Formula 1, $M^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and $0.9 \leq a \leq 1.1$, $0.8 \leq b < 1$, $0 < c < 0.2$, $0 < d < 0.2$, $0 \leq e < 0.1$, and $b+c+d+e=1$.

(4) The present invention provides the positive electrode of any one of (1) to (3) above, wherein the lithium transition metal composite oxide is represented by Formula 2.

$$[\text{Formula 2}] \qquad Li_aNi_bCo_cMn_dO_2$$

wherein, in Formula 1, $0.9 \leq a \leq 1.1$, $0.8 \leq b < 1$, $0 < c < 0.2$, $0 < d < 0.2$, and $b+c+d=1$.

(5) The present invention provides the positive electrode of (1) above, wherein the lithium transition metal composite oxide is represented by Formula 3.

$$[\text{Formula 3}] \qquad Li_xNi_yMn_zM^2_wO_2$$

wherein, in Formula 3, $M^2$ is at least one selected from the group consisting of cobalt (Co), Al, Zr, B, W, Mo, Cr, Nb, Mg, Hf, Ta, La, Ti, Sr, Ba, Ce, Sn, Y, Zn, F, P, and S, and $1.1 < x \leq 1.3$, $0.1 \leq y \leq 0.5$, $0.4 \leq z \leq 0.9$, $0 \leq w \leq 0.1$, and $x+y+z+w=2$.

(6) The present invention provides the positive electrode of (1) or (5) above, wherein the lithium transition metal composite oxide is represented by Formula 4.

$$[\text{Formula 4}] \qquad Li_xNi_yMn_zO_2$$

wherein, in Formula 4, $1.1 < x \leq 1.3$, $0.1 \leq y \leq 0.5$, $0.4 \leq z \leq 0.9$, and $x+y+z=2$.

(7) The present invention provides the positive electrode of any one of (1) to (6) above, wherein the metal oxide includes at least one metal selected from the group consisting of aluminum (Al), niobium (Nb), and zirconium (Zr).

(8) The present invention provides the positive electrode of any one of (1) to (7) above, wherein the coating layer has the thickness of 0.5 nm or more to 1.0 nm or less.

(9) The present invention provides the positive electrode of any one of (1) to (8) above, wherein the positive electrode has the ratio (BPH/TPH) of the peak intensity height (BPH) of the bottom of the positive electrode active material layer to the peak intensity height (TPH) of the top of the positive electrode active material layer of 0.8 or more to 1.4 or less.

(10) The present invention provides the positive electrode of any one of (1) to (9) above, wherein the positive electrode active material layer has a porosity of 20% or more to 40% or less.

(11) The present invention provides the positive electrode of any one of (1) to (10) above, wherein the positive electrode active material layer has a porosity of 24% or more to 38% or less.

(12) The present invention provides the positive electrode of any one of (1) to (11) above, wherein, in a plurality of positive electrode active material particles identified in the cross section of the positive electrode active material layer which crosses the top of the positive electrode active material layer, as the top surface of the positive electrode active material layer, and the bottom of the positive electrode active material layer as the interface between the positive electrode active material layer and the current collector, the positive electrode has a ratio of the number of positive electrode active material particles with cracks of 50% or less.

(13) The present invention provides the positive electrode of any one of (1) to (12) above, wherein adhesion of the positive electrode active material layer to the current collector is 50 gf/20 mm or more.

(14) The present invention provides a lithium secondary battery including the positive electrode of any one of (1) to (13).

In a positive electrode of the present invention, adhesion between a positive electrode active material layer and a current collector is excellent by controlling distribution of a binder in the positive electrode active material layer in the positive electrode including a positive electrode active material.

## BRIEF DESCRIPTION OF THE DRAWINGS

FIG. 1 is an electron microscope image of a cross section of a positive electrode prepared in Example 2 of the present invention.

FIG. 2 is a graph illustrating the results of measuring an intensity of an F K$\alpha$ signal for a fluorine element contained in a binder using EDS (Energy-dispersive X-ray spectroscopy) line scan on the cross section of the positive electrode prepared in Example 2 of the present invention.

FIG. 3 is an electron microscope image of a cross section of a positive electrode prepared in Comparative Example 2 of the present invention.

FIG. 4 is a graph illustrating the results of measuring an intensity of an F K$\alpha$ signal for a fluorine element contained in a binder using EDS (Energy-dispersive X-ray spectroscopy) line scan on the cross section of the positive electrode prepared in Comparative Example 2 of the present invention.

FIG. 5 is an electron microscope image of a cross section of a positive electrode prepared in Example 5 of the present invention.

FIG. 6 is a graph illustrating the results of measuring an intensity of an F K$\alpha$ signal for a fluorine element contained in a binder using EDS (Energy-dispersive X-ray spectroscopy) line scan on the cross section of the positive electrode prepared in Example 5 of the present invention.

FIG. 7 is an electron microscope image of a cross section of a positive electrode prepared in Comparative Example 5 of the present invention.

FIG. 8 is a graph illustrating the results of measuring an intensity of an F K$\alpha$ signal for a fluorine element contained in a binder using EDS (Energy-dispersive X-ray spectroscopy) line scan on the cross section of the positive electrode prepared in Comparative Example 5 of the present invention.

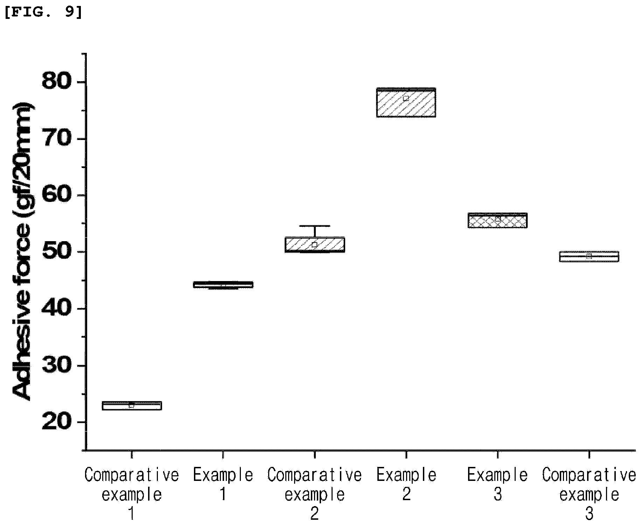

FIG. 9 is a graph illustrating the results of measuring adhesion of positive electrodes prepared in Examples 1 to 3 and Comparative Examples 1 to 3 of the present invention.

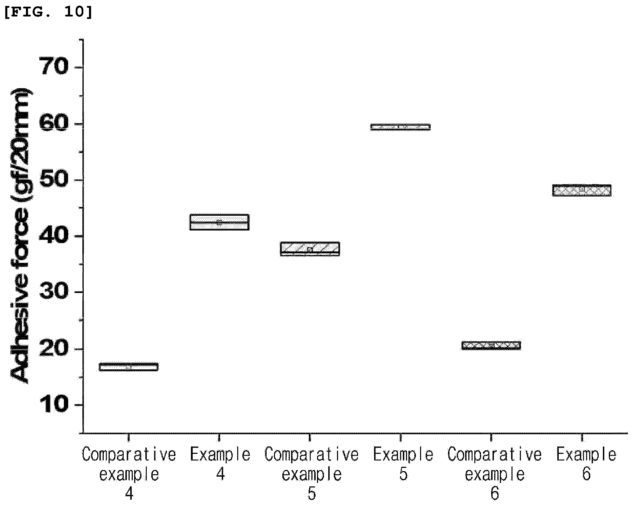

FIG. 10 is a graph illustrating the results of measuring adhesion of positive electrodes prepared in Examples 4 to 6 and Comparative Examples 4 to 6 of the present invention.

FIG. 11 is an image in which a cross section of the positive electrode prepared in Example 1 of the present invention is photographed with an electron microscope, and particles with cracks and particles without cracks were classified and shown from a cross section of a particulate positive electrode active material that is identified in a cross section of a positive electrode active material layer.

FIG. 12 is an image in which a cross section of the positive electrode prepared in Example 3 of the present invention is photographed with an electron microscope, and particles with cracks and particles without cracks were classified and shown from a cross section of a particulate positive electrode active material that is identified in a cross section of a positive electrode active material layer.

FIG. 13 is an image in which a cross section of the positive electrode prepared in Comparative Example 1 of the present invention is photographed with an electron microscope, and particles with cracks and particles without cracks were classified and shown from a cross section of a particulate positive electrode active material that is identified in a cross section of a positive electrode active material layer.

## DETAILED DESCRIPTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "primary particle" denotes a smallest particle unit which is distinguished as one body when a cross section of a positive electrode active material is observed through a scanning electron microscope (SEM), wherein it may be composed of a plurality of crystallites.

In the present invention, the expression "secondary particle" denotes a secondary structure formed by aggregation of a plurality of primary particles. An average particle diameter of the secondary particle may be measured using a particle size analyzer.

The expression "average particle diameter ($D_{50}$)" in the present invention denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the $D_{50}$ may be measured by calculating a particle diameter at 50% of the cumulative distribution of volume according to the particle diameter using the measurement instrument.

## Positive Electrode

The present invention provides a positive electrode including a positive electrode active material in which adhesion between a positive electrode active material layer and a current collector is excellent by controlling distribution of a binder in the positive electrode active material layer.

According to an embodiment of the present invention, the positive electrode includes a current collector and a positive electrode active material layer formed on at least one surface of the current collector, wherein the positive electrode active material layer includes a particulate positive electrode active material and a fluorine-based binder. The particulate positive electrode active material includes a lithium transition metal composite oxide and a coating layer containing a metal oxide on a surface of the particulate positive electrode active material. The coating layer has a thickness of 0.1 nm or more to 2.0 nm or less. When an intensity of an F K$\alpha$ signal is measured using EDS (Energy-dispersive X-ray spectroscopy) line scan on a cross section of the positive electrode active material layer which crosses a top of the positive electrode active material layer, as a top surface of the positive electrode active material layer, and a bottom of the positive electrode active material layer, as an interface between the positive electrode active material layer and the current collector, a ratio (BPH/TPH) of a peak intensity height (BPH) of the bottom of the positive electrode active material layer to a peak intensity height (TPH) of the top of the positive electrode active material layer may be 0.8 or more.

According to an embodiment of the present invention, the current collector may be a positive electrode collector, and the positive electrode collector may include a metal having high conductivity and is not particularly limited as long as it has no reactivity in a voltage range of the battery, and the positive electrode active material layer is easily adhered thereto. As the positive electrode collector, for example, stainless steel, aluminum, nickel, titanium, fired carbon, or aluminum or stainless steel that is surface treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

According to an embodiment of the present invention, the particulate positive electrode active material included in the positive electrode active material layer may include a lithium transition metal composite oxide and may be lithium transition metal composite oxide particles as a specific example.

According to an embodiment of the present invention, the lithium transition metal composite oxide may be a high nickel (high Ni) positive electrode active material including 80 mol% or more of nickel based on total transition metals excluding lithium, and, in this case, high energy density may be secured from a high nickel amount, and distribution of a binder in the positive electrode active material layer may be controlled from the coating layer.

According to an embodiment of the present invention, the lithium transition metal composite oxide may be represented by Formula 1 below.

[Formula 1]    $Li_aNi_bCo_cMn_dM^1_eO_2$

In Formula 1, $M^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and $0.9 \leq a \leq 1.1$, $0.8 \leq b < 1$, $0 < c < 0.2$, $0 < d < 0.2$, $0 \leq e < 0.1$, and $b+c+d+e=1$.

According to an embodiment of the present invention, $M^1$ in Formula 1 may be a doping element that may be included in the lithium transition metal composite oxide and may be appropriately selected as needed.

According to an embodiment of the present invention, in Formula 1, a is a molar ratio of lithium to transition metals in the lithium transition metal composite oxide, wherein a may be 0.9 or more, 0.95 or more, or 1.0 or more, and may also be 1.1 or less, 1.7 or less, 1.5 or less, or 1.3 or less.

According to an embodiment of the present invention, in Formula 1, b, c, d, and e may be mole fractions of nickel (Ni), cobalt (Co), manganese (Mn), and doping element ($M^1$) among the transition metals, respectively. As a specific example, b is the mole fraction of the nickel (Ni) among the transition metals, wherein b may be 0.8 or more, and may also be less than 1.0, 0.95 or less, 0.9 or less, or 0.85 or less. c is the mole fraction of the cobalt (Co) among the transition metals, wherein c may be greater than 0, 0.05 or more, or 0.1 or more, and may also be less than 0.2, 0.15 or less, or 0.1 or less. d is the mole fraction of the manganese (Mn) among the transition metals, wherein d may be greater than 0, 0.05 or more, or 0.1 or more, and may also be less than 0.2, 0.15 or less, or 0.1 or less. e is the mole fraction of the doping element ($M^1$) among the transition metals, wherein e may be 0, 0.01 or more, 0.02 or more, 0.03 or more, 0.04 or more, 0.05 or more, 0.06 or more, 0.07 or more, 0.08 or more, or 0.09 or more, and may also be less than 0.10, 0.09 or less, 0.08 or less, 0.07 or less, 0.06 or less, 0.05 or less, 0.04 or less, 0.03 or less, 0.02 or less, or 0.01 or less.

According to an embodiment of the present invention, the lithium transition metal composite oxide may be represented by Formula 2 below.

[Formula 2] $\quad Li_aNi_bCo_cMn_dO_2$

In Formula 1, $0.9 \leq a \leq 1.1$, $0.8 \leq b < 1$, $0 < c < 0.2$, $0 < d < 0.2$, and $b+c+d=1$, and descriptions of a, b, c, and d are as described in connection with Formula 1 above.

According to an embodiment of the present invention, the lithium transition metal composite oxide may be a high manganese (or manganese-rich) positive electrode active material, and, in this case, efficiency and stability are excellent, and the distribution of the binder in the positive electrode active material layer may be controlled from the coating layer.

According to an embodiment of the present invention, the lithium transition metal composite oxide may be represented by Formula 3 below.

[Formula 3] $\quad Li_xNi_yMn_zM^2{}_wO_2$

In Formula 3, $M^2$ is at least one selected from the group consisting of Co, Al, Zr, B, W, Mo, Cr, Nb, Mg, Hf, Ta, La, Ti, Sr, Ba, Ce, Sn, Y, Zn, F, P, and S, and $1.1 < x \leq 1.3$, $0.1 \leq y \leq 0.5$, $0.4 \leq z \leq 0.9$, $0 \leq w \leq 0.1$, and $x+y+z+w=2$.

According to an embodiment of the present invention, in Formula 3, $M^2$ may be a doping element that may be included in the lithium transition metal composite oxide and may be appropriately selected as needed.

According to an embodiment of the present invention, in Formula 3, x is a molar ratio of lithium in the lithium transition metal composite oxide, wherein x may be 1.10 or more, 1.15 or more, or 1.20 or more, and may also be 1.30 or less, 1.25 or less, or 1.20 or less.

According to an embodiment of the present invention, in Formula 3, y, z, and w may be molar ratios of nickel (Ni), manganese (Mn), and doping element ($M^2$) in the lithium transition metal composite oxide, respectively. As a specific example, y is the molar ratio of the nickel (Ni), wherein y may be 0.1 or more, 0.11 or more, 0.12 or more, 0.13 or more, 0.14 or more, 0.15 or more, 0.16 or more, 0.17 or more, 0.18 or more, 0.19 or more, 0.20 or more, 0.21 or more, 0.22 or more, 0.23 or more, 0.24 or more, 0.25 or more, 0.26 or more, 0.27 or more, 0.28 or more, 0.29 or more, or 0.30 or more, and may also be 0.5 or less, 0.49 or less, 0.48 or less, 0.47 or less, 0.46 or less, 0.45 or less, 0.44 or less, 0.43 or less, 0.42 or less, 0.41 or less, or 0.40 or less. z is the molar ratio of the manganese (Mn), wherein z may be 0.4 or more, 0.41 or more, 0.42 or more, 0.43 or more, 0.44 or more, 0.45 or more, 0.46 or more, 0.47 or more, 0.48 or more, 0.49 or more, 0.50 or more, 0.51 or more, 0.52 or more, 0.53 or more, 0.54 or more, or 0.55 or more, and may also be 0.9 or less, 0.8 or less, 0.79 or less, 0.78 or less, 0.77 or less, 0.76 or less, 0.75 or less, 0.74 or less, 0.73 or less, 0.72 or less, 0.71 or less, or 0.70 or less. w is the molar ratio of the doping element ($M^2$), wherein w may be 0, 0.01 or more, 0.02 or more, 0.03 or more, 0.04 or more, or 0.05 or more, and may also be less than 0.1, 0.09 or less, 0.08 or less, 0.07 or less, 0.06 or less, 0.05 or less, 0.04 or less, 0.03 or less, 0.02 or less, or 0.01 or less.

According to an embodiment of the present invention, the lithium transition metal composite oxide may be represented by Formula 4 below.

[Formula 4] $\quad Li_xNi_yMn_zO_2$

In Formula 4, $1.1<x\leq1.3$, $0.1\leq y\leq0.5$, $0.4\leq z\leq0.9$, and $x+y+z=2$, and descriptions of x, y, and z are as described in Formula 3 above.

According to an embodiment of the present invention, the lithium transition metal composite oxide may be a high nickel (High Ni) positive electrode active material represented by Formula 1 or 2 or a high manganese (or manganese-rich) positive electrode active material represented by Formula 3 or 4.

According to an embodiment of the present invention, the particulate positive electrode active material may be a secondary particle which is formed by aggregation of primary particles. As a specific example, the positive electrode active material may have an average particle diameter ($D_{50}$) of 0.5 um or more, 1 um or more, 1.5 um or more, or 2 um or more, and may also have an average particle diameter ($D_{50}$) of 20 um or less, 18 pm or less, 16 um or less, 14 um or less, 12 um or less, and, within this range, initial charge and discharge efficiency is excellent, and resistance may be reduced. Herein, the average particle diameter ($D_{50}$) of the positive electrode active material may mean an average particle diameter of the secondary particle in which the primary particles are aggregated.

According to an embodiment of the present invention, a coating layer is formed on the surface of the particulate positive electrode active material and may play a role in providing stability to the particulate positive electrode active material and controlling the distribution of the binder during formation of the positive electrode active material layer at the same time.

According to an embodiment of the present invention, the metal oxide may include at least one metal selected from the group consisting of aluminum (Al), niobium (Nb), and zirconium (Zr). As a specific example, the coating layer may include an aluminum oxide, and, in this case, an increase in resistance may be minimized while a protective effect of the positive electrode active material from the coating layer may be increased, and the distribution of the binder may be controlled during the formation of the positive electrode active material layer at the same time.

According to an embodiment of the present invention, the coating layer containing a metal oxide may be formed by an atomic layer deposition method. In a case in which the coating layer is formed on the surface of the particulate positive electrode active material by using the atomic layer deposition method, since the coating layer containing a uniform and thin metal oxide may be formed, the increase in resistance may be minimized while the protective effect of the positive electrode active material may be increased. Particularly, in the case that the coating layer is formed on the surface of the particulate positive electrode active material by using the atomic layer deposition method, the distribution of the binder may be more easily controlled during the formation of the positive electrode active material layer due to the uniformly and thinly formed coating layer.

According to an embodiment of the present invention, with respect to the coating layer formed on the surface of the particulate positive electrode active material, steps of loading a particulate positive electrode active material into a reaction chamber for performing an atomic layer deposition method (S1); and forming a coating layer on a surface of the positive electrode active material by performing a unit process including steps (S10) and (S20) a plurality of times (S2) may be included.

- (S10) a step of injecting a vapor-phase precursor into the reaction chamber and injecting a purge gas
- (S20) a step of injecting a vapor-phase reaction gas into the reaction chamber and injecting a purge gas

According to an embodiment of the present invention, the step (S1) is a step of loading the particulate positive electrode active material to be coated into the reaction chamber of an atomic layer deposition (ALD) system, wherein it may be performed by positioning the particulate positive electrode active material obtained in a powder state in the reaction chamber.

According to an embodiment of the present invention, the atomic layer deposition method is a self-limiting surface treatment method in which thin film layers are formed layer by layer to an atomic-size thickness. Unlike a chemical vapor deposition (CVD) method in which a thin film is deposited by thermal decomposition and gas-phase reaction of a reaction gas, the atomic layer deposition method may be a reaction in which, after one reactant causes a chemical reaction with a surface of a substrate to cause chemical adsorption, a thin film is formed while a second or third reactant is injected to again cause chemical adsorption on the substrate. That is, the atomic layer deposition method is a method of forming a thin film through chemical adsorption through periodic supply of each reactant, wherein, since a reaction only occurs between the reactant and the targeted substrate, for example, on the surface of the particulate positive electrode active material and a reaction between the reactants does not occur, deposition on an atomic scale may be possible.

According to an embodiment of the present invention, the forming of the coating layer on the surface of the positive electrode active material by performing the unit process including steps (S10) and (S20) a plurality of times may be a step for forming a coating layer by performing the atomic layer deposition method on the surface of the particulate positive electrode active material by injecting a precursor and/or a reaction gas into the reaction chamber.

According to an embodiment of the present invention, the atomic layer deposition method, by the forming of the coating layer on the surface of the positive electrode active material by performing the unit process including steps (S10) and (S20) a plurality of times, may easily form a coating layer at a lower temperature than chemical vapor deposition in which particles formed by a chemical reaction of gas are deposited on the surface of the substrate. As a specific example, the atomic layer deposition method may be performed at a temperature of 60°C to 240°C. As a more specific example, the atomic layer deposition method may be performed at a temperature of 70°C or more, 80°C or more, 90°C or more, 100°C or more, 110°C or more, 120°C or more, 130°C or more, or 140°C or more, and may also be performed at a temperature of 230°C or less, 220°C or less , 210°C or less, 200°C or less, 190°C or less, 180°C or less, 170°C or less, or 160°C or less, and smooth performance of the reaction and/or uniform formation of the coating layer may be possible within this range.

According to an embodiment of the present invention, the step (S10) included in the unit process may be a step for atomic layer deposition of a metal or polymer from the precursor. As a specific example, the precursor may be an aluminum precursor. The aluminum precursor may be an aluminum compound represented by Formula 5 below.

$$[\text{Formula 5}] \qquad AlR^1R^2R^3$$

In Formula 5, $R^1$ to $R^3$ may each be an organic group bonded to Al, and, as specific examples, $R^1$ to $R^3$ may each independently be hydrogen; an alkyl group having 1 to 10 carbon atoms; a halogen group; or an amino group, wherein the amino group may be a secondary amino group or tertiary amino group substituted with an alkyl group having 1 to 10 carbon atoms. As a specific example, in Formula 2, $R^1$ to $R^3$ may each independently be an alkyl group having 1 to 5 carbon atoms; a halogen group; or a secondary amino group or tertiary amino group substituted with an alkyl group having 1 to 5 carbon atoms. As a more specific example, in Formula 2, $R^1$ to $R^3$ may each independently be an alkyl group having 1 to 3 carbon atoms; a halogen group; or a tertiary amino group substituted with an alkyl group having 1 to 3 carbon atoms.

According to an embodiment of the present invention, the aluminum precursor may be at least one selected from the group consisting of trimethylaluminium, triethylaluminium, tri-n-propylalumium, tri-n-butylalumium, dimethylaluminium chloride, diethylaluminium chloride, di-n-propylaluminium chloride, di-n-butyl aluminium chloride, tris (dimethylamino)aluminium(III), and tris(diethylamino)aluminium(III) .

According to an embodiment of the present invention, the precursor in the step (S10) may be injected into the reaction chamber in a state of being filled in a steel container maintained at 10°C to 50°C, 10°C to 40°C, 10°C to 30°C, or 15°C to 25°C. When the aluminum precursor is injected into the reaction chamber, it may be injected in a state of being vaporized by reduced pressure without using a separate carrier gas.

According to an embodiment of the present invention, the step (S20) may be a step for oxidizing the precursor from the reaction gas, wherein the reaction gas, as an oxidizing agent, may be water vapor ($H_2O$) or ozone ($O_3$) .

According to an embodiment of the present invention, the reaction gas in the step (S20) may be injected into the reaction chamber in a state of being filled in a steel container maintained at 0°C to 40°C, 0°C to 30°C, 10°C to 20°C, or 12°C to 18°C. When the reaction gas is injected into the reaction chamber, it may be injected in a state of being vaporized by reduced pressure without using a separate carrier gas.

According to an embodiment of the present invention, the purge gas injected during purging in the steps (S10) and (S20) may be at least one selected from inert gases, such as Ar, $N_2$, He, Ne, and/or Kr, and may preferably be Ar or $N_2$.

According to an embodiment of the present invention, the coating layer may have a thickness of 0.1 nm or more, 0.2 nm or more, 0.3 nm or more, 0.4 nm or more, or 0.5 nm or more, and may also have a thickness of 2.0 nm or less, 1.5 nm or less, 1.4 nm or less, 1.3 nm or less, 1.2 nm or less, 1.1 nm or less, 1.0 nm or less, 0.9 nm or less, 0.8 nm or less, 0.7 nm or less, or 0.6 nm or less. Within this range, the coating layer acts as a resistance layer, and formation of the coating layer that is thicker than necessary may be prevented, while exhibiting the protective effect to the positive electrode active material as much as possible. Furthermore, the distribution of the binder may be more easily controlled during the formation of the positive electrode active material layer.

According to an embodiment of the present invention, the fluorine-based binder plays a role in improving the adhesion between positive electrode active material particles and between the positive electrode active material and the current collector, wherein the binder may include polyvinylidene fluoride (PVDF), polyvinylidene fluoride-hexafluoropropylene copolymer (PVDF-co-HFP), polytetrafluoroethylene, a fluorine rubber, and a polymer having hydrogen thereof substituted with lithium (Li), sodium (Na), or calcium (Ca), or various copolymers thereof, and any one thereof or a mixture of two or more thereof may be used. The fluorine-based binder may be included in an amount of 0.1 wt% to 15 wt%, based on the total weight of the positive electrode active material layer.

According to an embodiment of the present invention, the positive electrode active material layer may optionally include a conductive agent in addition to the particulate positive electrode active material and the fluorine-based binder, if necessary. In this case, the positive electrode active material may be included in an amount of 80 wt% to 99 wt%, more specifically, 85 wt% to 98.5 wt%, based on the total weight of the positive electrode active material layer, and excellent capacity characteristics may be obtained within this range.

According to an embodiment of the present invention, the conductive agent is used to provide conductivity to the electrode. Any conductive agent may be used without particular limitation as long as it has suitable electron conductivity without causing adverse chemical changes in the battery. Specific examples of the conductive agent may be graphite, such as natural graphite or artificial graphite; carbon based materials, such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt%, based on the total weight of the positive electrode active material layer.

According to an embodiment of the present invention, the positive electrode may be prepared according to a typical method of preparing a positive electrode except that the distribution of the binder is controlled from types of the particulate positive electrode active material and the binder. Specifically, a composition for forming a positive electrode active material layer, which is prepared by dissolving or dispersing the particulate positive electrode active material and the fluorine-based binder as well as optionally the conductive agent and a dispersant, if necessary, in a solvent, coating the positive electrode collector, and drying and rolling the coated positive electrode collector. Alternatively, the positive electrode may be prepared by casting the composition for forming a positive electrode active material layer on a separate support and then laminating a film separated from the support on the positive electrode collector.

According to an embodiment of the present invention, the solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the particulate positive electrode active material, the fluorine-based binder, the conductive agent, and the dispersant, in consideration of a coating thickness of a slurry and manufacturing yield, and may allow to have a viscosity that may provide excellent thickness uniformity during the subsequent coating for the preparation of the positive electrode.

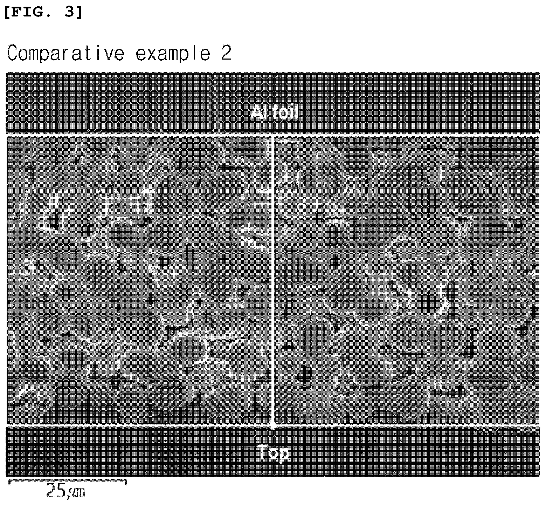

According to an embodiment of the present invention, when an intensity of an F Kα signal is measured using EDS (Energy-dispersive X-ray spectroscopy) line scan on a cross section of the positive electrode active material layer which crosses a top of the positive electrode active material layer, as a top surface of the positive electrode active material layer, and a bottom of the positive electrode active material layer as an interface between the positive electrode active material layer and the current collector, the positive electrode may have a ratio (BPH/TPH) of a peak intensity height (BPH) of the bottom of the positive electrode active material layer to a peak intensity height (TPH) of the top of the positive electrode active material layer of 0.8 or more. As shown in FIG. 3, if an intensity of a signal for a fluorine element contained in the fluorine-based binder is measured using an EDS line scan on the cross section of the positive electrode active material layer from the bottom to the top or from the top to the bottom of the positive electrode active material layer, the distribution of the fluorine-based binder in the cross section of the positive electrode active material layer may be checked. In this case, the positive electrode according to the present invention exhibits a ratio (BPH/TPH) of the peak intensity height (BPH) of the bottom of the positive electrode active material layer to the peak intensity height (TPH) of the top of the positive electrode active material layer of 0.8 or more, and this means that an amount of the fluorine-based binder present in the bottom of the positive electrode active material layer is at a level of 80% or more base on an amount of the fluorine-based binder present in the top of the positive electrode active material layer.

According to an embodiment of the present invention, the bottom of the positive electrode active material layer is not limited to a specific point of the interface between the positive electrode active material layer and the current collector, but may mean a region from the interface between the positive electrode active material layer and the current collector to a portion having a predetermined height, in consideration of pores present at the interface between the positive electrode active material layer and the current collector. As a specific example, the bottom of the positive electrode active material layer may mean a region from the interface between the positive electrode active material layer and the current collector to a height range of 10% or less, based on a total thickness of the positive electrode active material layer. Accordingly, the peak intensity height (BPH) of the bottom of the positive electrode active material layer may mean an arithmetic average value of peak intensity heights within the bottom region.

According to an embodiment of the present invention, the top of the positive electrode active material layer is not limited to a specific point on the surface of the positive electrode active material layer, but may mean a region from the top surface of the positive electrode active material layer to a portion having a predetermined height in consideration of pores present on the top surface of the positive electrode active material layer. As a specific example, the top of the positive electrode active material layer may mean a region from the top surface of the positive electrode active material layer to a height range of 10% or less, based on the total thickness of the positive electrode active material layer. Accordingly, the peak intensity height (TPH) of the top of the positive electrode active material layer may mean an arithmetic average value of peak intensity heights within the top region.

According to an embodiment of the present invention, the positive electrode may have a ratio (BPH/TPH) of the peak intensity height (BPH) of the bottom of the positive electrode active material layer to the peak intensity height (TPH) of the top of the positive electrode active material layer of 0.8 or more, 0.9 or more, or 1.0 or more, and may also have a ratio (BPH/TPH) of 1.4 or less, 1.3 or less, 1.2 or less, or 1.1 or less. Within this range, the fluorine-based binder may be evenly distributed from the top to the bottom of the positive electrode active material layer or from the bottom to the top of the positive electrode active material layer to improve adhesion of the positive electrode active material layer.

According to an embodiment of the present invention, the positive electrode active material layer may have a porosity of 20% or more, 21% or more, 23% or more, or 24% or more, and may also have a porosity of 40% or less, 39% or less, 38% or less, 37% or less, 36% or less, 35% or less, 34% or less, 33% or less, 32% or less, 31% or less, 30% or less, 29% or less, 28% or less, 27% or less, 26% or less, or 25% or less. The porosity of the positive electrode active material layer may be porosity after rolling, and may be a value calculated according to Equation 1 below.

$$[\text{Equation 1}]$$

$$\text{Porosity} = (1 - \text{packing density/true density}) \times 100$$

According to an embodiment of the present invention, the true density in Equation 1 may mean theoretical density of the composition for forming a positive electrode active material layer except for the solvent in a state in which there are no pores. As a specific example, the true density may be calculated by considering a weight ratio and/or true density of each material included in the composition for forming a positive electrode active material layer except for the solvent. As a more specific example, the true density may be a value calculated according to Equation 2 below.

$$[\text{Equation 2}]$$

$$\text{True density} = 1/(\textstyle\sum(P_i/D_i))$$

In Equation 2, pi may mean a weight ratio of each component included in the composition for forming a positive electrode active material layer except for the solvent, and Di may mean true density of each component included in the composition for forming a positive electrode active material layer except for the solvent. As a specific example, the true density may mean a reciprocal of a value which is obtained by adding a value obtained by dividing a weight ratio of the positive electrode active material by true density of the positive electrode active material, a value obtained by dividing a weight ratio of the binder by true density of the binder, and/or a value obtained by dividing a weight ratio of the conductive agent by true density of the conductive agent. The true density, for example, may be measured with a known true density meter.

According to an embodiment of the present invention, the packing density in Equation 1 may mean density of the positive electrode active material layer after performing a rolling process. As a specific example, the packing density may be a value which is calculated by dividing an amount (loading amount) per unit area of the positive electrode active material layer by a thickness of the positive electrode active material layer by sampling an arbitrary point after rolling the positive electrode active material layer formed on the positive electrode collector. Thus, the porosity of the positive electrode active material layer may be controlled through the components of the positive electrode active material layer, the loading amount per area of the positive electrode active material layer, and/or the thickness of the positive electrode active material layer.

According to an embodiment of the present invention, in a case in which the components of the positive electrode active material layer and the loading amount per area of the positive electrode active material layer are the same, since the thinner the positive electrode active material layer (i.e., the smaller the pressing gap), the lower the porosity, and the thicker the positive electrode active material layer (i.e., the larger the pressing gap), the higher the porosity. Thus, the pressing gap may be appropriately adjusted in consideration of the porosity of the desired positive electrode active material layer.

According to an embodiment of the present invention, in a plurality of positive electrode active material particles identified in the cross section of the positive electrode active material layer which crosses the top of the positive electrode active material layer, as the top surface of the positive electrode active material layer, and the bottom of the positive electrode active material layer as the interface between the positive electrode active material layer and the current collector, the positive electrode may have a ratio of the number of positive electrode active material particles with cracks of 50% or less. In the formation of the positive electrode by using the composition for forming a positive electrode active material layer which contains the particulate positive electrode active material, in a case in which occurrence of cracks in the particulate positive electrode active material is reduced during rolling, the control of the distribution of the binder in the positive electrode active material layer may be affected to improve the adhesion of the positive electrode. Specifically, the occurrence of the cracks in the particulate positive electrode active material is reduced when the positive electrode active material layer is formed by rolling, the particulate positive electrode active material maintains a typical particle shape, and, accordingly, pressure transmitted to the positive electrode active material layer is evenly distributed such that concentration of the binder to the top may be prevented.

According to an embodiment of the present invention, in the plurality of positive electrode active material particles identified in the cross section of the positive electrode active material layer which crosses the top of the positive electrode active material layer, as the top surface of the positive electrode active material layer, and the bottom of the positive electrode active material layer as the interface between the positive electrode active material layer and the current collector, the positive electrode may have a ratio of the number of positive electrode active material particles with cracks of 50% or less, 49% or less, 48% or less, 47% or less, 46% or less, 45% or less, or 44% or less, and a lower limit thereof is not limited, but the positive electrode may have a ratio of the number of positive electrode active material particles with cracks of greater than 0%, 10% or more, 20% or more, 30% or more, or 40% or more. Within this range, the adhesion of the positive electrode may be particularly excellent.

According to an embodiment of the present invention, in the plurality of positive electrode active material particles identified in the cross section of the positive electrode active material layer which crosses the top of the positive electrode active material layer, as the top surface of the positive electrode active material layer, and the bottom of the positive electrode active material layer as the interface between the positive electrode active material layer and the current collector, the positive electrode may have a ratio of an area of cracks to a total area of the particulate positive electrode active material of 1.6% or less, 1.55% or less, 1.52% or less, 1.50% or less, or 1.48% or less, and a lower limit thereof is not limited, but the positive electrode may have a ratio of the area of cracks to the total area of the particulate positive electrode active material of greater than 0%, 0.1% or more, 0.50 or more, or 1.0% or more. Within this range, the adhesion of the positive electrode may be particularly excellent.

According to an embodiment of the present invention, in the plurality of positive electrode active material particles identified in the cross section of the positive electrode active material layer which crosses the top of the positive electrode active material layer, as the top surface of the positive electrode active material layer, and the bottom of the positive electrode active material layer as the interface between the positive electrode active material layer and the current collector, the positive electrode may have a ratio of an area of cracks to an area of the positive electrode active material particles with cracks of 3.0% or less, 2.9% or less, 2.8% or less, 2.7% or less, or 2.65% or less, and a lower limit thereof is not limited, but the positive electrode may have a ratio of the area of cracks to the area of the positive electrode active material particles with cracks of greater than 0%, 0.1% or more, 0.50 or more, or 1.0% or more. Within this range, the adhesion of the positive electrode may be particularly excellent.

According to an embodiment of the present invention, adhesion of the positive electrode active material layer to the current collector may be 50 gf/20 mm or more. Specifically, the adhesion of the positive electrode active material layer to the current collector may be 50.0 gf/20 mm or more, 50.5 gf/20 mm or more, 51.0 gf/20 mm or more, 52.0 gf/20 mm or more, 53.0 gf/20 mm or more, 54.0 gf/20 mm or more, 55.0 gf/20 mm or more, 56.0 gf/20 mm or more, 57.0 gf/20 mm or more, 58.0 gf/20 mm or more, 59.0 gf/20 mm or more, 60.0 gf/20 mm or more, 65.0 gf/20 mm or more, 70.0 gf/20 mm or more, or 75.0 gf/20 mm or more, and an upper limit thereof is not limited, but the adhesion of the positive electrode active material layer to the current collector may be 100.0 gf/20 mm or less, 90.0 gf/20 mm or less, or 80.0 gf/20 mm or less.

**Lithium Secondary Battery**

The present invention provides a lithium secondary battery including the above positive electrode.

According to an embodiment of the present invention, the lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

According to an embodiment of the present invention, the negative electrode may include a negative electrode collector and a negative electrode active material layer disposed on the negative electrode collector.

According to an embodiment of the present invention, the negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

According to an embodiment of the present invention, the negative electrode active material layer may optionally include a binder and a conductive agent in addition to the negative electrode active material.

According to an embodiment of the present invention, a compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

According to an embodiment of the present invention, the binder of the negative electrode active material layer is a component that assists in the binding between the conductive agent, the active material, and the current collector, wherein the binder is typically added in an amount of 0.1 wt% to 10 wt%, based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

According to an embodiment of the present invention, the conductive agent of the negative electrode active material layer is a component for further improving conductivity of the negative electrode active material, wherein the conductive agent may be added in an amount of 10 wt% or less, preferably, 5 wt% or less, based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

According to an embodiment of the present invention, the negative electrode may be prepared by coating on the negative electrode collector a composition for forming a negative electrode active material layer, which is prepared by dissolving or dispersing the binder and optionally the conductive agent, as well as the negative electrode active material in a solvent, and drying the coated negative electrode collector. Alternatively, the coating may be prepared by casting the composition for forming a negative electrode active material layer on a separate support and then laminating a film separated from the support on the negative electrode collector.

According to an embodiment of the present invention, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component, or a polymer material may be used to secure heat resistance or mechanical strength, and the separator having a single layer or multilayer structure may be optionally used.

According to an embodiment of the present invention, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

According to an embodiment of the present invention, any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

According to an embodiment of the present invention, the lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

According to an embodiment of the present invention, in order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, according to an embodiment of the present invention, a battery module including the lithium secondary battery as a unit cell and a battery pack including the battery module are provided.

According to an embodiment of the present invention, the battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## EXAMPLES

## Preparation Example

## Preparation Example 1

A particulate positive electrode active material (LG Chem, GL80), which was a secondary particle having an average particle diameter ($D_{50}$) of 10.9 um and had an average composition of $LiNi_{0.8}Mn_{0.1}Co_{0.1}O_2$, was loaded into an ALD system (NCDTech Co., Ltd., Lucida C200-PL) in which a substrate temperature was maintained at 150°C. Subsequently, the following (S10) process and (S20) process were used as a unit process, and the unit process was performed 3 times to prepare a positive electrode active material coated with an aluminum oxide.

(S10) Trimethylaluminum, as an aluminum precursor, was injected into the ALD system for 1 second. The aluminum precursor was used by being filled in a steel container maintained at 20°C, and the aluminum precursor vaporized by reduced pressure was injected into the system without using a separate carrier gas. Subsequently, purging was performed for 50 seconds using Ar as an inert gas.

(S20) Water vapor, as a reaction gas, was injected into the ALD system for 1 second. The reaction gas was used by being filled in a steel container maintained at 14°C, and the reaction gas vaporized by reduced pressure was injected into the system without using a separate carrier gas. Subsequently, purging was performed for 50 seconds using Ar as an inert gas.

**Preparation Example 2**

A particulate positive electrode active material, which was a secondary particle having an average particle diameter ($D_{50}$) of 6.41 um and had an average composition of $Li_{1.2}Ni_{0.35}Mn_{0.65}O_2$, was loaded into an ALD system (NCDTech Co., Ltd., Lucida C200-PL) in which a substrate temperature was maintained at 150°C. Subsequently, the following (S10) process and (S20) process were used as a unit process, and the unit process was performed 5 times to prepare a positive electrode active material coated with an aluminum oxide.

(S10) Trimethylaluminum, as an aluminum precursor, was injected into the ALD system for 1 second. The aluminum precursor was used by being filled in a steel container maintained at 20°C, and the aluminum precursor vaporized by reduced pressure was injected into the system without using a separate carrier gas. Subsequently, purging was performed for 50 seconds using Ar as an inert gas.

(S20) Water vapor, as a reaction gas, was injected into the ALD system for 1 second. The reaction gas was used by being filled in a steel container maintained at 14°C, and the reaction gas vaporized by reduced pressure was injected into the system without using a separate carrier gas. Subsequently, purging was performed for 50 seconds using Ar as an inert gas.

**Comparative Preparation Example 1**

A particulate positive electrode active material (LG Chem, GL80), which was a secondary particle having an average particle diameter ($D_{50}$) of 10.9 um and had an average composition of $LiNi_{0.8}Mn_{0.1}Co_{0.1}O_2$, was dried at 130°C for 5 hours using a vacuum oven without a separate coating process to prepare a positive electrode active material.

**Comparative Preparation Example 2**

A positive electrode active material coated with an aluminum oxide was prepared in the same manner as in Preparation Example 1 except that, the (S10) process and (S20) process were used as a unit process, and the unit process was performed 20 times.

**Comparative Preparation Example 3**

A particulate positive electrode active material, which was a secondary particle having an average particle diameter ($D_{50}$) of 6.41 um and had an average composition of $Li_{1.2}Ni_{0.35}Mn_{0.65}O_2$, was dried at 130°C for 5 hours using a vacuum oven without a separate coating process to prepare a positive electrode active material.

**Experimental Example 1: Measurement of Thickness of Coating Layer of the Positive Electrode Active Material**

A thickness of each coating layer was measured in the following manner using the positive electrode active materials prepared in Preparation Examples 1 and 2 and Comparative Preparation Example 2. The thickness of the coating layer of the positive electrode active material prepared in Preparation Example 1 was 0.6 nm, the thickness of the coating layer of the positive electrode active material prepared in Preparation Example 2 was 0.7 nm, and the thickness of the coating layer of the positive electrode active material prepared in Comparative Preparation Example 2 was 3.3 nm.

   * Thickness (nm) of the coating layer: an amount of an aluminum element in the coating layer was confirmed for the positive electrode active materials prepared in Preparation Examples 1 and 2 and Comparative Preparation Example 2 by inductively coupled plasma-optical emission spectroscopy (ICP-OES) using an inductively coupled plasma-optical emission spectrometer (Agilent, 5110 IPC-OES).

Also, a Brunauer-Emmett-Teller (BET) specific surface area of each positive electrode active material particle was measured for the positive electrode active materials prepared in Preparation Examples 1 and 2 and Comparative Preparation Example 2 using a specific surface area analyzer (MicrotracBEL Corp., BELSORP-MAX).

Thereafter, assuming that the coating layer was evenly distributed on the surface of the positive electrode active material particle, the thickness of the coating layer was calculated according to Equation 3 below.

$$[Equation\ 3]$$

$$Thickness\ of\ coating\ layer\ (nm) = \{(A \times 1/B)/\rho\}/C$$

In Equation 3, A is a weight ratio of the aluminum element in the coating layer which is measured by ICP-OES, B is a weight ratio of aluminum according to a theoretically calculated elemental composition (AlOx, X is a molar ratio of O to Al) in the coating layer, C is a BET specific surface area, and $\rho$ is density according to the theoretically calculated elemental composition (AlOx, X is a molar ratio of O to Al) in the coating layer.

**Examples and Comparative Examples**

**Example 1**

The positive electrode active material prepared in Preparation Example 1, carbon black (Denka Company Limited, Denka Black) as a conductive agent, and PVdF (Kureha Corporation, KF1300), as a binder, were added in a weight ratio of 97.5:1:1.5 (positive electrode active material:conductive agent:binder) to a solvent (DAEJUNG CHEMICALS & METALS CO., LTD., N-methylpyrrolidone (NMP)) to prepare a composition for forming a positive electrode active material layer.

One surface of a 12 um thick aluminum foil current collector was coated with each composition for forming a positive electrode active material layer prepared above and dried at 135°C for 3 hours to form a positive electrode active material layer. Subsequently, the positive electrode active material layer was rolled by a roll pressing method, and a positive electrode having a porosity of the positive electrode active material layer after the rolling of 28% was prepared.

**Example 2**

A positive electrode having a porosity of the positive electrode active material layer after rolling of 38% was prepared in the same manner as in Example 1 except that, when the positive electrode active material layer was rolled by a roll pressing method, the rolling was performed such that the porosity of the positive electrode active material layer after the rolling became 38%.

**Example 3**

A positive electrode having a porosity of the positive electrode active material layer after rolling of 24% was prepared in the same manner as in Example 1 except that, when the positive electrode active material layer was rolled by a roll pressing method, the rolling was performed such that the porosity of the positive electrode active material layer after the rolling became 24%.

**Example 4**

A positive electrode having a porosity of the positive electrode active material layer after rolling of 28% was prepared in the same manner as in Example 1 except that, the positive electrode active material prepared in Preparation Example 2 was used instead of the positive electrode active material prepared in Preparation Example 1.

**Example 5**

A positive electrode having a porosity of the positive electrode active material layer after rolling of 38% was prepared in the same manner as in Example 4 except that, when the positive electrode active material layer was rolled by a roll pressing method, the rolling was performed such that the porosity of the positive electrode active material layer after the rolling became 38%.

**Example 6**

A positive electrode having a porosity of the positive electrode active material layer after rolling of 24% was prepared in the same manner as in Example 4 except that, when the positive electrode active material layer was rolled by a roll pressing method, the rolling was performed such that the porosity of the positive electrode active material layer after the rolling became 24%.

**Comparative Example 1**

A positive electrode having a porosity of the positive electrode active material layer after rolling of 28% was prepared in the same manner as in Example 1 except that, the positive electrode active material prepared in Comparative Preparation Example 1, instead of the positive electrode active material prepared in Preparation Example 1, was used as a positive electrode active material.

**Comparative Example 2**

A positive electrode having a porosity of the positive electrode active material layer after rolling of 38% was prepared in the same manner as in Example 2 except that, the positive electrode active material prepared in Comparative Preparation Example 1, instead of the positive electrode active material prepared in Preparation Example 1, was used as a positive electrode active material.

**Comparative Example 3**

A positive electrode having a porosity of the positive electrode active material layer after rolling of 28% was prepared in the same manner as in Example 1 except that, the positive electrode active material prepared in Comparative Preparation Example 2, instead of the positive electrode active material prepared in Preparation Example 1, was used.

**Comparative Example 4**

A positive electrode having a porosity of the positive electrode active material layer after rolling of 28% was prepared in the same manner as in Example 1 except that, the positive electrode active material prepared in Comparative Preparation Example 3, instead of the positive electrode active material prepared in Preparation Example 1, was used.

**Comparative Example 5**

A positive electrode having a porosity of the positive electrode active material layer after rolling of 38% was prepared in the same manner as in Example 2 except that, the positive electrode active material prepared in Comparative Preparation Example 3, instead of the positive electrode active material prepared in Preparation Example 1, was used.

**Comparative Example 6**

A positive electrode having a porosity of the positive electrode active material layer after rolling of 24% was prepared in the same manner as in Example 3 except that, the positive electrode active material prepared in Comparative Preparation Example 3, instead of the positive electrode active material prepared in Preparation Example 1, was used.

**Experimental Example 2: Measurement of Change in Distribution of the Binder of the Positive Electrode Active Material Layer**

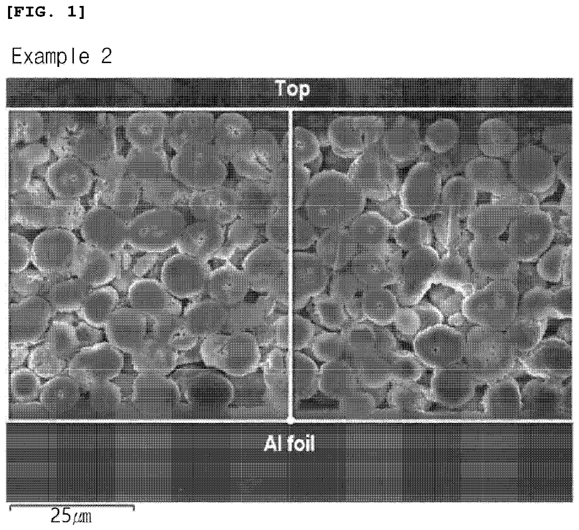

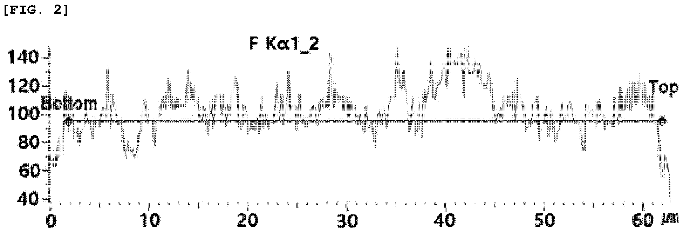

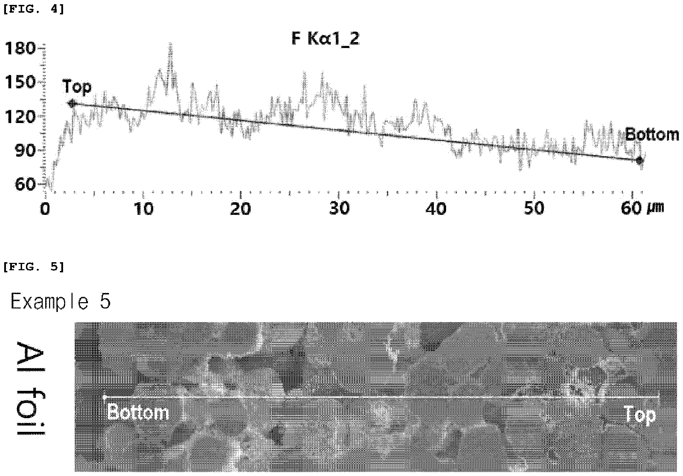

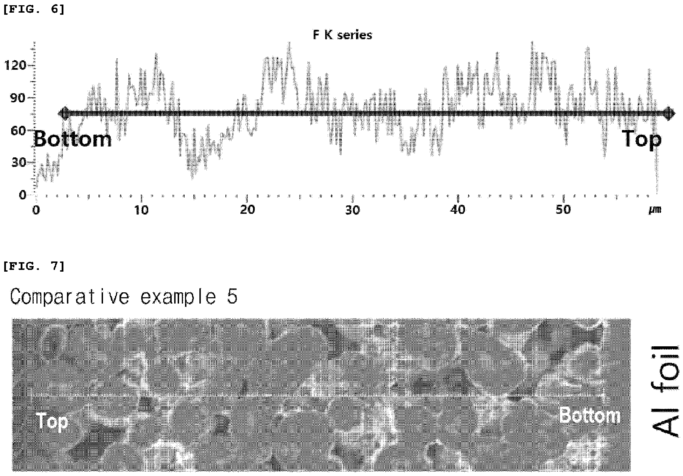

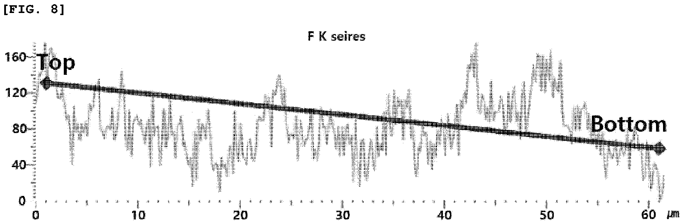

A cross-sectional treatment of the positive electrodes prepared in Examples 2 and 5 and Comparative Examples 2 and 5 was performed using an ion milling machine (Hitachi, IM4000) so as to vertically cross a bottom (Al foil) of the positive electrode active material layer, as an interface between the positive electrode active material layer and the current collector, and a top of the positive electrode active material layer, as the top surface of the positive electrode active material layer. Thereafter, each cross section was photographed using an electron microscope (JEOL Ltd., JSM-7610F), and presented in FIG. 1 (Example 2), FIG. 3 (Comparative Example 2), FIG. 5 (Example 5), and FIG. 7 (Comparative Example 5), respectively. Subsequently, an intensity of an F K$\alpha$ signal for a fluorine element contained in the binder was measured for each cross section of the positive electrodes prepared in Examples 2 and 5 and Comparative Examples 2 and 5 using EDS (Energy-dispersive X-ray spectroscopy) line scan and presented in FIG. 2 (Example 2), FIG. 4 (Comparative Example 2), FIG. 6 (Example 5), and FIG. 8 (Comparative Example 5), respectively.

As confirmed from FIG. 2, with respect to the positive electrode prepared in Example 2, since a peak intensity height (BPH) of the bottom (Al foil) of the positive electrode active material layer, as the interface between the positive electrode active material layer and the current collector, was about 96 and a peak intensity height (TPH) of the top of the positive electrode active material layer, as the surface of the positive electrode active material layer, was about 94, a ratio (BPH/TPH) between them was about 1.02, and thus, it may be confirmed that distribution of the binder in the positive electrode active material layer was uniform.

In contrast, as confirmed from FIG. 4, with respect to the positive electrode prepared in Comparative Example 2, since a peak intensity height (BPH) of the bottom (Al foil) of the positive electrode active material layer, as the interface between the positive electrode active material layer and the current collector, was about 80 and a peak intensity height (TPH) of the top of the positive electrode active material layer, as the surface of the positive electrode active material layer, was about 130, a ratio (BPH/TPH) between them was about 0.62, and thus, it may be confirmed that the binder in the positive electrode active material layer was concentrated on the top of the positive electrode active material layer.

Also, as confirmed from FIG. 6, with respect to the positive electrode prepared in Example 5, since a peak intensity height (BPH) of the bottom (Al foil) of the positive electrode active material layer, as the interface between the positive electrode active material layer and the current collector, was about 76 and a peak intensity height (TPH) of the top of the positive electrode active material layer, as the top surface of the positive electrode active material layer, was about 76, a ratio (BPH/TPH) between them was about 1.00, and thus, it may be confirmed that distribution of the binder in the positive electrode active material layer was uniform.

In contrast, as confirmed from FIG. 8, with respect to the positive electrode prepared in Comparative Example 5, since a peak intensity height (BPH) of the bottom (Al foil) of the positive electrode active material layer, as the interface between the positive electrode active material layer and the current collector, was about 58 and a peak intensity height (TPH) of the top of the positive electrode active material layer, as the top surface of the positive electrode active material layer, was about 135, a ratio (BPH/TPH) between them was about 0.43, and thus, it may be confirmed that the binder in the positive electrode active material layer was concentrated on the top of the positive electrode active material layer.

**Experimental Example 3: Measurement of Adhesion of the Positive Electrode**

The positive electrodes prepared in Examples 1 to 6 and Comparative Examples 1 to 6 were cut to have a width of 20 mm, and a 90° peel test was performed at a peel speed of 5 mm/s to indicate an average value of portions stabilized after a peak as adhesion in the following Table 1, FIG. 5 (Examples 1 to 3 and Comparative Examples 1 to 3), and FIG. 6 (Examples 4 to 6 and Comparative Examples 4 to 6), and presented together with a thickness of each positive electrode.

[Table 1]

| Catego ry | Examples | | | | | | Comparative Examples | | | | | |
|---|---|---|---|---|---|---|---|---|---|---|---|---|
| | 1 | 2 | 3 | 4 | 5 | 6 | 1 | 2 | 3 | 4 | 5 | 6 |
| Adhesi on (gf/20 mm) | 51.2 | 77.1 | 53.2 | 42.4 | 59.4 | 48.5 | 23.0 | 44.3 | 52.7 | 16.6 | 37.6 | 20.5 |
| Positi ve electr ode thickn ess (μm) | 72.5 | 82.0 | 68.7 | 65.8 | 73.1 | 63.3 | 72.5 | 82.0 | 72.2 | 65.6 | 73.2 | 63.4 |

As illustrated in Table 1, FIG. 5, and FIG. 6, with respect to the positive electrodes of Examples 1, 2, and 4 to 6 in which the binder was uniformly distributed in the positive electrode active material layer according to the present invention, it may be confirmed that adhesions were significantly improved in comparison to those of the positive electrodes of Comparative Examples 1, 2, and 4 to 6 in which the binder in the positive electrode active material layer was concentrated on the top of the positive electrode active material layer even though they had the same porosity.

Particularly, when comparing the positive electrodes of Example 1 and Comparative Example 1 in which the porosities of the positive electrode active material layers were the same at 28%, it may be confirmed that the adhesion of the positive electrode of Example 1 was improved by about 2.26 times that of the positive electrode of Comparative Example 1, and, when comparing the positive electrodes of Example 2 and Comparative Example 2 in which the porosities of the positive electrode active material layers were the same at 38%, it may be confirmed that the adhesion of the positive electrode of Example 2 was improved by about 1.74 times that of the positive electrode of Comparative Example 2.

Also, when comparing the positive electrodes of Example 4 and Comparative Example 4 in which the porosities of the positive electrode active material layers were the same at 28%, it may be confirmed that the adhesion of the positive electrode of Example 4 was improved by about 2.55 times that of the positive electrode of Comparative Example 4, when comparing the positive electrodes of Example 5 and Comparative Example 5 in which the porosities of the positive electrode active material layers were the same at 38%, it may be confirmed that the adhesion of the positive electrode of Example 5 was improved by about 1.60 times that of the positive electrode of Comparative Example 5, and, when comparing the positive electrodes of Example 6 and Comparative Example 6 in which the porosities of the positive electrode active material layers were the same at 24%, it may be confirmed that the adhesion of the positive electrode of Example 6 was improved by about 2.37 times that of the positive electrode of Comparative Example 6.

Furthermore, from the positive electrodes of Examples 3 and 6 in which the distribution of the binder in the positive electrode active material layer was uniform according to the present invention, it may be confirmed that sufficient adhesion may be secured due to the improvement in adhesion even if the porosity was reduced by further increasing a rolling ratio in comparison to those of Examples 1 and 4.

With respect to the positive electrode prepared in Comparative Example 3, it may be confirmed that the positive electrode exhibited a similar level of adhesion to Example 1 in which the positive electrode active material included the coating layer so that the porosity of the positive electrode active material layer was the same at 28%, but, as confirmed in Experimental Example 5 to be described subsequently, it may be confirmed that there was a problem in that efficiency of a battery was reduced and resistance was increased as the thickness of the coating layer was increased.

**Experimental Example 4: Measurement of Cracks of Positive Electrode Active Material Particles**

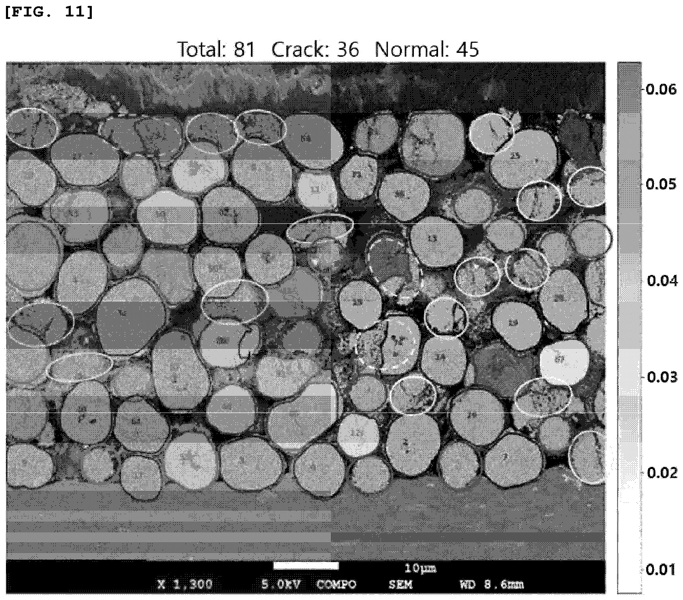

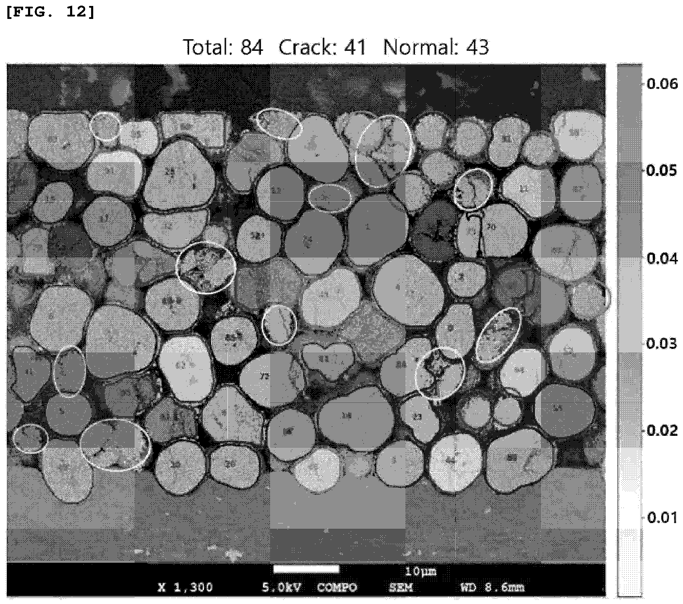

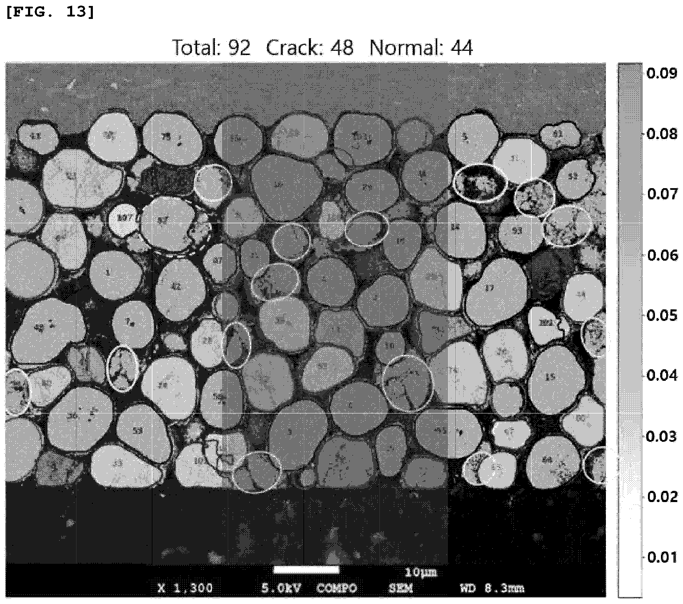

A cross-sectional treatment of the positive electrodes prepared in Examples 1 and 3 and Comparative Example 1 was performed using an ion milling machine (Hitachi, IM4000) so as to vertically cross a bottom of the positive electrode active material layer, as an interface between the positive electrode active material layer and the current collector, and a top of the positive electrode active material layer, as the top surface of the positive electrode active material layer. Thereafter, each cross section was photographed using an electron microscope (JEOL Ltd., JSM-7610F), and particles with cracks were classified into red and yellow and particles without cracks were classified into blue and pink from a cross section of the particulate positive electrode active material identified in the cross section of the positive electrode active material layer, and presented in FIG. 11 (Example 1), FIG. 12 (Example 3), and FIG. 13 (Comparative Example 1), respectively. Also, a ratio of the number of positive electrode active material particles with cracks, a ratio of an area of cracks to a total area of the positive electrode active material particles identified from the cross section of the positive electrode, and a ratio of an area of cracks to an area of the positive electrode active material particles with cracks were respectively calculated and presented in Table 2 below.

In this case, with respect to the positive electrodes of Example 1 and Comparative Example 1, four samples were used, and an arithmetic average value for the four samples was presented, and, with respect to the positive electrode of Example 3, three samples were used, and an arithmetic average value for the three samples was presented.

[Table 2]

| Category | Examples | | Comparative Example |
|---|---|---|---|
| | 1 | 3 | 1 |
| Ratio of the number of positive electrode active material particles with cracks (%) | 43.22 | 48.58 | 52.07 |
| Ratio of area of cracks to total area of the positive electrode active material particles (%) | 1.48 | 1.52 | 1.69 |
| Ratio of area of cracks to area of the positive electrode active material particles with cracks | 2.67 | 2.62 | 3.05 |

As illustrated in Table 2 and FIGS. 11 to 13, with respect to the positive electrode of Example 1 in which the binder was uniformly distributed in the positive electrode active material layer according to the present invention, it may be confirmed that cracks of the positive electrode active material were reduced in comparison to those of the positive electrode of Comparative Example 1 in which the binder in the positive electrode active material layer was concentrated on the top of the positive electrode active material layer even though it had the same porosity.

Also, with respect to the positive electrode of Example 3 in which the distribution of the binder in the positive electrode active material layer was uniform according to the present invention, it may be confirmed that cracks of the positive electrode active material were reduced even if the porosity was further reduced in comparison to that of Comparative Example 1.

**Experimental Example 5: Charge and Discharge Evaluation**

After disposing a polypropylene separator (W-SCOPE Corporation) between each of the positive electrodes prepared in Example 1 and Comparative Examples 1 and 3 and a 300 um thick lithium metal thin film as a negative electrode, a coin-type half-cell was prepared by using an organic electrolyte solution of ethylene carbonate(EC)/dimethyl carbonate(DMC)/LiPF$_6$ (Merck Battery grade, EC/DMC=1/1, 1M LiPF$_6$).

Subsequently, each of the coin-type half-cells prepared in Example 1 and Comparative Examples 1 and 3 was activated, and then charged and discharged. Specifically, charge/discharge were performed under the conditions of a charge end voltage of 4.25 V, a discharge end voltage of 3.0 V, and 0.1 C/0.1 C at 25°C to measure charge capacity, discharge capacity, charge and discharge efficiency, and discharge resistance and the results thereof are presented in Table 3 below.

[Table 3]

| Category | | Example 1 | Comparative Example 1 | Comparative Example 3 |
|---|---|---|---|---|
| Charge capacity | (mAh/g) | 224.1 | 224.4 | 220.7 |
| Discharge capacity | (mAh/g) | 204.2 | 203.7 | 184.7 |
| Efficiency | (%) | 91.1 | 90.8 | 83.7 |
| Discharge resistance | (Ω) | 18.1 | 17.6 | 21.7 |

As illustrated in Table 3, with respect to the coin-type half-cell prepared by including the positive electrode of Example 1 which was formed by including the positive electrode active material in which the coating layer containing a metal oxide was included on the surface of the particulate positive electrode active material according to the present invention and the thickness of the coating layer was 0.6 nm, it may be confirmed that the coin-type half-cell exhibited the same level of charge and discharge characteristics as Comparative Example 1 having the same porosity. That is, even if the positive electrode active material included the coating layer on the surface thereof, it may be confirmed that degradation of charge and discharge characteristics and an increase in resistance due to the coating layer may be prevented by adjusting the thickness of the coating layer within the range defined in the present invention.

In contrast, with respect to the coin-type half-cell prepared by including the positive electrode of Comparative Example 3 which was formed by including the positive electrode active material having the coating layer with a thickness of 3.3 nm, it may be confirmed that charge capacity and discharge capacity were reduced in comparison to those of Example 1 and Comparative Example 1 which had the same porosity, and also, charge and discharge efficiency was reduced and discharge resistance was increased. That is, when the positive electrode active material included the coating layer on the surface thereof, in a case in which the thickness of the coating layer was greater than the range defined in the present invention, it may be confirmed that, apart from the improvement in adhesion as confirmed in Experimental Example 3, a phenomenon of the degradation of the charge and discharge characteristics and the increase in the resistance due to the coating layer occurred.

**Claims**

1.  A positive electrode comprising:

    a current collector and a positive electrode active material layer formed on at least one surface of the current collector,
    wherein the positive electrode active material layer comprises a particulate positive electrode active material and a fluorine-based binder,
    wherein the particulate positive electrode active material comprises a lithium transition metal composite oxide and a coating layer containing a metal oxide on a surface of the particulate positive electrode active material, wherein the coating layer has a thickness of 0.1 nm or more to 2.0 nm or less, and
    when an intensity of an F Kα signal is measured using EDS (Energy-dispersive X-ray spectroscopy) line scan on a cross section of the positive electrode active material layer which crosses a top of the positive electrode active material layer, as a top surface of the positive electrode active material layer, and a bottom of the positive electrode active material layer as an interface between the positive electrode active material layer and the current collector, a ratio (BPH/TPH) of a peak intensity height (BPH) of the bottom of the positive electrode active material layer to a peak intensity height (TPH) of the top of the positive electrode active material layer is 0.8 or more.

2.  The positive electrode of claim 1, wherein the lithium transition metal composite oxide comprises 80 mol% or more of nickel based on total transition metals excluding lithium.

3.  The positive electrode of claim 1, wherein the lithium transition metal composite oxide is represented by Formula 1:

[Formula 1]           $Li_aNi_bCo_cMn_dM^1_eO_2$

wherein, in Formula 1, $M^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and $0.9a \leq a \leq 1.1$, $0.8 \leq b < 1$, $0 < c < 0.2$, $0 < d < 0.2$, $0 \leq e < 0.1$, and $b+c+d+e=1$.

4. The positive electrode of claim 1, wherein the lithium transition metal composite oxide is represented by Formula 2:

[Formula 2]           $Li_aNi_bCo_cMn_dO_2$

wherein, in Formula 1, $0.9 \leq a \leq 1.1$, $0.8 \leq b < 1$, $0 < c < 0.2$, $0 < d < 0.2$, and $b+c+d=1$.

5. The positive electrode of claim 1, wherein the lithium transition metal composite oxide is represented by Formula 3:

[Formula 3]           $Li_xNi_yMn_zM^2_wO_2$

wherein, in Formula 3,
$M^2$ is at least one selected from the group consisting of cobalt (Co), Al, Zr, B, W, Mo, Cr, Nb, Mg, Hf, Ta, La, Ti, Sr, Ba, Ce, Sn, Y, Zn, F, P, and S, and
$1.1 < x \leq 1.3$, $0.1 \leq y \leq 0.5$, $0.4 \leq z \leq 0.9$, $0 \leq w \leq 0.1$, and $x+y+z+w=2$.

6. The positive electrode of claim 1, wherein the lithium transition metal composite oxide is represented by Formula 4:

[Formula 4]           $Li_xNi_yMn_zO_2$

wherein, in Formula 4,
$1.1 < x \leq 1.3$, $0.1 \leq y \leq 0.5$, $0.4 \leq z0 \leq .9$, and $x+y+z=2$.

7. The positive electrode of claim 1, wherein the metal oxide comprises at least one metal selected from the group consisting of aluminum (Al), niobium (Nb), and zirconium (Zr).

8. The positive electrode of claim 1, wherein the coating layer has the thickness of 0.5 nm or more to 1.0 nm or less.

9. The positive electrode of claim 1, wherein the positive electrode has the ratio (BPH/TPH) of the peak intensity height (BPH) of the bottom of the positive electrode active material layer to the peak intensity height (TPH) of the top of the positive electrode active material layer of 0.8 or more to 1.4 or less.

10. The positive electrode of claim 1, wherein the positive electrode active material layer has a porosity of 20% or more to 40% or less.

11. The positive electrode of claim 1, wherein the positive electrode active material layer has a porosity of 24% or more to 38% or less.

12. The positive electrode of claim 1, wherein, in a plurality of positive electrode active material particles identified in the cross section of the positive electrode active material layer which crosses the top of the positive electrode active material layer, as the top surface of the positive electrode active material layer, and the bottom of the positive electrode active material layer as the interface between the positive electrode active material layer and the current collector, the positive electrode has a ratio of the number of positive electrode active material particles with cracks of 50% or less.

13. The positive electrode of claim 1, wherein adhesion of the positive electrode active material layer to the current collector is 50 gf/20 mm or more.

14. A lithium secondary battery comprising the positive electrode of claim 1.

[FIG. 1]

Example 2

[FIG. 2]

[FIG. 3]

Comparative example 2

Al foil

Top

25 μm

[FIG. 4]

F Kα1_2

[FIG. 5]

Example 5

[FIG. 6]

F K series

[FIG. 7]

Comparative example 5

[FIG. 8]

[FIG. 9]

[FIG. 10]

[FIG. 11]

Total: 81　Crack: 36　Normal: 45

[FIG. 12]

Total: 84  Crack: 41  Normal: 43

[FIG. 13]

Total: 92  Crack: 48  Normal: 44

## INTERNATIONAL SEARCH REPORT

| International application No. |
|---|
| **PCT/KR2023/001056** |

**A. CLASSIFICATION OF SUBJECT MATTER**

**H01M 4/36**(2006.01)i; **H01M 4/04**(2006.01)i; **H01M 4/505**(2010.01)i; **H01M 4/525**(2010.01)i; **H01M 4/62**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); H01M 10/052(2010.01); H01M 4/1391(2010.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 전지(lithium battery), 양극활물질(positive electrode active material), 리튬 (lithium), 불소계 바인더(fluorine-based binder), 금속 산화물(metal oxide), 코팅(coating)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0091605 A (LG ENERGY SOLUTION, LTD.) 22 July 2021 (2021-07-22)<br>See claims 1, 5, 7 and 9-10; and paragraphs [0054], [0062], [0064] and [0100]. | 1-14 |
| A | KR 10-2020-0071018 A (LG CHEM, LTD.) 18 June 2020 (2020-06-18)<br>See entire document. | 1-14 |
| A | KR 10-2020-0066246 A (POSCO et al.) 09 June 2020 (2020-06-09)<br>See entire document. | 1-14 |
| A | KR 10-2021-0117212 A (LG CHEM, LTD.) 28 September 2021 (2021-09-28)<br>See entire document. | 1-14 |
| A | KR 10-2019-0058367 A (LG CHEM, LTD.) 29 May 2019 (2019-05-29)<br>See entire document. | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 April 2023** | **19 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/001056**

| Patent document cited in search report | | | Publication date (day/month/year) | Patent family member(s) | | | Publication date (day/month/year) |
|---|---|---|---|---|---|---|---|
| KR | 10-2021-0091605 | A | 22 July 2021 | CN | 114762148 | A | 15 July 2022 |
| | | | | EP | 4050683 | A1 | 31 August 2022 |
| | | | | JP | 2023-506059 | A | 14 February 2023 |
| | | | | US | 2023-0002899 | A1 | 05 January 2023 |
| | | | | WO | 2021-145647 | A1 | 22 July 2021 |
| KR | 10-2020-0071018 | A | 18 June 2020 | CN | 113646924 | A | 12 November 2021 |
| | | | | EP | 3879603 | A1 | 15 September 2021 |
| | | | | EP | 3879603 | A4 | 05 January 2022 |
| KR | 10-2020-0066246 | A | 09 June 2020 | CN | 113169333 | A | 23 July 2021 |
| | | | | EP | 3890071 | A1 | 06 October 2021 |
| | | | | EP | 3890071 | A4 | 02 March 2022 |
| | | | | KR | 10-2327052 | B1 | 16 November 2021 |
| KR | 10-2021-0117212 | A | 28 September 2021 | CN | 115053368 | A | 13 September 2022 |
| | | | | EP | 4089764 | A1 | 16 November 2022 |
| | | | | US | 2023-0073433 | A1 | 09 March 2023 |
| | | | | WO | 2021-187907 | A1 | 23 September 2021 |
| KR | 10-2019-0058367 | A | 29 May 2019 | CN | 111316480 | A | 19 June 2020 |
| | | | | CN | 111316480 | B | 20 September 2022 |
| | | | | EP | 3696894 | A1 | 19 August 2020 |
| | | | | EP | 3696894 | A4 | 16 December 2020 |
| | | | | JP | 2021-501982 | A | 21 January 2021 |
| | | | | JP | 7066223 | B2 | 13 May 2022 |
| | | | | KR | 10-2021-0053862 | A | 12 May 2021 |
| | | | | US | 2020-0335783 | A1 | 22 October 2020 |
| | | | | WO | 2019-103463 | A1 | 31 May 2019 |

Form PCT/ISA/210 (patent family annex) (July 2022)

**REFERENCES CITED IN THE DESCRIPTION**

**Patent documents cited in the description**

- KR 1020220009552
- WO 2011033707 A

- WO 2011033707 A1